# EUROPÄISCHE PATENTSCHRIFT

(11) **EP 0 612 416 B1**
(45) Veröffentlichungstag und Bekanntmachung des Hinweises auf die Patenterteilung: **04.12.1996**
(21) Anmeldenummer: 92920151.5
(22) Anmeldetag: 26.09.1992
(51) Int. Cl.: G02F 1/33, G02F 1/133

(54) **FLÜSSIGKRISTALLANZEIGENANORDNUNG**
LIQUID-CRYSTAL DISPLAY DEVICE
SYSTEME D'AFFICHAGE A CRISTAUX LIQUIDES

(30) Priorität: 13.11.1991 DE 4137260
(43) Veröffentlichungstag der Anmeldung: 31.08.1994
(73) Patentinhaber: ROBERT BOSCH GMBH, 70442 Stuttgart (DE)
(72) Erfinder: GODDARD, George, D-8508 Wendelstein (DE)
(86) Internationale Anmeldenummer: DE9200829
(87) Internationale Veröffentlichungsnummer: WO9310479

(56) Entgegenhaltungen:
- EP-A- 0 031 475
- EP-A- 0 084 873
- DE-A- 3 742 245
- DE-B- 2 458 637
- US-A- 4 206 501
- US-A- 4 734 612

## Beschreibung

Die Erfindung betrifft eine Flüssigkristallanzeigenanordnung nach dem Oberbegriff des Anspruchs 1.

Flüssigkristallanzeigenanordnungen, die sowohl bei heller Umgebungsbeleuchtung als auch bei Dunkelheit abgelesen werden müssen, umfassen eine Lichtquelle zur Hinterbeleuchtung der Flüssigkristallanzeige. An eine derartige Lichtquelle werden besondere Anforderungen gestellt. Sie muß eine lange Lebensdauer, hohe und gleichmäßige Lichtausbeute sowie bei Verwendung von farbigen Flüssigkristallanzeigen auch ein konstante Farbtemperatur bieten. Diese Anforderungen können von einer als Leuchtstofflampe ausgebildeten Lichtquelle erfüllt werden.

Ein gravierender Nachteil von Leuchtstofflampen besteht allerdings darin, daß ihre Beleuchtungsstärke temperaturabhängig ist und sie insbesondere bei niedrigen Umgebungstemperaturen, das heißt unter plus 10 °C, nur noch unzureichend oder gar nicht mehr arbeiten.

Aus der DE-OS 37 42 245 ist ein Flüssigkristallanzeigesystem bekannt, bei dem zur Beleuchtung einer Flüssigkristallanzeige Fluoreszenzlicht- und Glühlichtquellen vorgesehen sind. Die Fluoreszenzlichtquellen, die eine hohe Lichtleistung bieten, liefern ihre maximale Lichtausbeute aber nur bei Umgebungstemperaturen von plus 40 °C-50 °C. Um auch eine Beleuchtung der Füssigkristallanzeige bei niedrigen Temperaturen z. B. bis minus 50 °C zu ermöglichen, sind zusätzlich Glühlichtquellen vorgesehen, die aber gegenüber den Fluoreszenzlichtquellen nur eine geringe Lichtleistung aufweisen und somit nur eine notdürftige Beleuchtung bewirken können. Diese Glühlichtquellen haben aber zusätzlich die Aufgabe, bei niedrigen Umgebungstemperaturen die benachbart angeordneten Fluoreszenzlichtquellen zu erwärmen und so auf eine Betriebstemperatur zu bringen, bei der sie ihre optimale Lichtleistung abgeben können.

Ein Nachteil von Glühlichtquellen im Zusammenhang mit der Beleuchtung von Flüssigkristallanzeigen besteht weiterhin darin, daß sie als überwiegend punktförmige Lichtquellen keine gleichmäßige Ausleuchtung des Anzeigefeldes und Erwärmung der Fluoreszenzlichtquellen bewirken können und außerdem nur eine geringe Lebensdauer besitzen.

Ferner ist aus der US-PS 4 206 501 eine Beleuchtungsanordnung für die Hinterbeleuchtung von Anzeigeoberflächen bekannt, bei eine Streuscheibe, die von punktförmigen Lichtquellen beleuchtet wird und durch ungleichmäßige Schwärzung eine gleichmäßige Verteilung des Lichtes auf das Anzeigefeld ermöglichen soll, mit einem Heizelement versehen ist. Dieses Heizelement dient dazu, das Anzeigefeld selbst zu erwärmen, damit die Anzeige in einem optimalen Temperaturbereich arbeiten kann.

Aus der JP-A-58-198 850 ist ein Leuchtstoffröhre bekannt, die mit einem temperaturgeregelten Folienheizelement überzogen ist. Das Folienheizelement wird von einem Temperaturregler gesteuert, der mit einem Temperatursensor gekoppelt ist und von diesem Steuersignale für die Umgebungstemperatur erhält. Diese Anordnung ist relativ aufwendig, da neben dem Temperatursensor auch ein zusätzlicher Temperaturregler benötigt wird.

Der Erfindung liegt die Aufgabe zu Grunde, bei einer Flüssigkristallanzeigenanordnung mit einer Flüssigkristallanzeige und einer als Leuchtstofflampe ausgebildeten Lichtquelle die Leuchtstofflampe gleichmäßig zu erwärmen und auf einer konstanten Betriebstemperatur zu halten.

Diese Aufgabe wird bei einer Flüssigkristallanzeigenanordnung nach dem Oberbegriff des Anspruchs 1 durch die im Kennzeichen angegebenen Merkmale gelöst.

Durch das temperaturgeregelte Folienheizelement läßt sich eine homogene Erwärmung über einer großen Fläche erzielen und dadurch auch die thermisch mit dem Folienheizelement gekoppelte Leuchtstofflampe gleichmäßig erwärmen. Sie erreicht dadurch schneller ihre optimale Betriebstemperatur als bei punktförmiger Erwärmung. Auf Grund der bei maximaler Leistung des Folienheizelementes dennoch niedrigen Betriebstemperatur wird eine lange Lebensdauer sichergestellt, so daß keine Wartungsarbeiten an der Flüssigkristallanzeigenanordnung durch einen vorzeitigen Ausfall des Folienheizelementes erforderlich sind.

Außerdem können derartige Flüssigkristallanzeigeanordnungen auch ohne Bedenken z. B. in Kraftfahrzeugen oder Flugzeugen eingesetzt werden, bei denen die einwandfreie Funktion und Zuverlässigkeit der Anzeige vor entscheidender Bedeutung für die Verkehrssicherheit ist. Darüberhinaus besteht auch die Möglichkeit, eine integrierte Temperaturregelung am Folienheizelement selbst vorzunehmen. Es gelingt so, eine enge Kopplung zu bewirken und dadurch die Voraussetzungen für eine schnelle Regelung zu schaffen.

Bei einer bevorzugten Ausgestaltung besitzt das Folienheizelement eine U-Form und zwischen den Schenkeln des Folienheizelementes ist ein Kaltleiter angeordnet.

Die Kombination eines Folienheizelementes mit einem Kaltleiter ermöglicht eine extrem einfache elektrische Beschaltung, in dem die beiden Elemente in Serie an die Versorgungsspannung angeschaltet werden. Eine sonst erforderliche elektronische Regelung mit aktiven Elementen kann also entfallen. Dadurch wird eine höchstmögliche Sicherheit gegen Störungen, z. B. durch hohe Feldstärken oder Überspannungen ohne zusätzliche Gegenmaßnahmen erzielt und außerdem läßt sich eine derartige Flüssigkristallanzeigenanordnung außerordentlich preisgünstig in großen Stückzahlen herstellen.

Weiterbildungen und vorteilhafte Ausgestaltungen der Erfindung ergeben sich aus den Ansprüchen, der weiteren Beschreibung und der Zeichnung, an Hand der die Erfindung erläutert wird.

In der Zeichnung zeigen:
- Fig. 1: einen Längsschnitt durch eine Flüssigkristallanzeigenanordnung nach der Erfindung,
- Fig. 2: ein Blockschaltbild des Folienheizelementes und des Kaltleiters und
- Fig. 3: eine Draufsicht auf eine vorteilhafte Ausgestaltung des Folienheizelementes in Verbindung mit dem Kaltleiter.

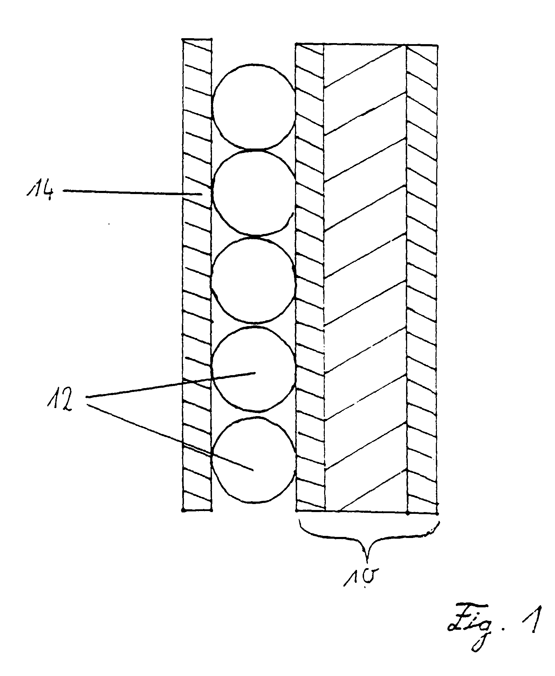

In Fig. 1 ist eine Flüssigkristallanzeigenanordnung im Querschnitt dargestellt. Sie umfaßt eine Flüssigkristallanzeige 10, eine als Leuchtstofflampe 12 ausgebildete Lichtquelle sowie an der von der Flüssigkristallanzeige 10 abgewandten Seite der Leuchtstofflampe 12 eine Wärmequelle 14. Die Wärmequelle 14 ist durch ein temperaturgeregeltes Folienheizelement gebildet.

Wird die Flüssigkristallanzeigenanordnung in einem Kraftfahrzeug eingesetzt, können Umgebungstemperaturen von bis zu minus 40 °C auftreten. Unter diesen Umgebungsbedingungen ist die Beleuchtungsstärke von Leuchtstofflampen sehr schlecht. Selbst bei einer Temperatur von plus 20 °C braucht die Leuchtstofflampe noch etwa 5 bis 10 Minuten Zeit, um ihre volle Helligkeit zu erreichen. Bei Umgebungstemperaturen von plus 10 °C wird die volle Helligkeit nicht erreicht. Es würde ein Helligkeitsverlust von ca. 40% auftreten.

Mit Hilfe des Folienheizelementes 14 wird bei Einschalten der Flüssigkristallanzeigenanordnung die Leuchtstofflampe 12 erwärmt und wesentlich schneller auf ihre optimale Betriebstemperatur aufgeheizt, die bei üblichen Ausführungen etwa plus 40 °C beträgt. Durch die Temperaturregelung nimmt die Heizleistung des Folienheizelementes 14 ab und erreicht einen Minimalwert, sobald die optimale Temperatur für die Leuchtstofflampe 12 erreicht ist.

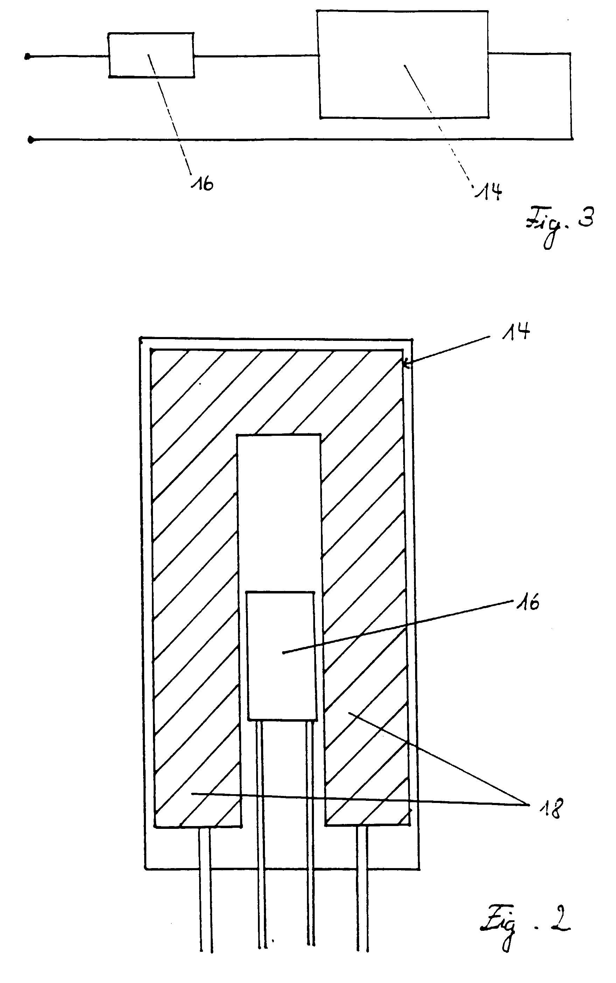

Bei einer praktischen Ausgestaltung, wie sie in Fig. 2 dargestellt ist, besitzt das Folienheizelement 14 eine U-förmige Form. Zwischen Schenkeln 18 des Folienheizelementes befindet sich ein Kaltleiter 16, der, wie Fig. 3 zeigt, elektrisch in Serie mit dem Folienheizelement 14 geschaltet und an die elektrische Versorgungsspannung angeschlossen werden kann. Wenn das Versorgungsnetz es von seiner Kapazität her zuläßt, könnte das Folienheizelement 14 auch ständig angeschaltet bleiben, um auch im ausgeschalteten Zustand der Leuchtstofflampe 12 diese auf Betriebstemperatur zu halten und damit bei niedrigen Umgebungstemperaturen bereits nach dem Einschalten die maximale Helligkeit der Leuchtstofflampe 12 sicherzustellen.

Zweckmäßig ist das temperaturgeregelte Folienheizelement 14 für eine maximale Heizleistung von ca. 25 Watt und eine minimale Heizleistung von ca. 7 Watt bemessen. Die minimale Heizleistung wird nach einem kontinuierlichen Absinken bei zunehmender Temperatur erreicht, wenn sich eine für den optimalen Betriebszustand der Leuchtstofflampe entsprechende Temperatur von ca. 40 °C eingestellt hat.

Durch die Erfindung wird erreicht, daß unabhängig von der Umgebungstemperatur sehr schnell die optimale Betriebstemperatur der Leuchtstofflampe und damit ihre größte Lichtausbeute erzielt wird. Diese Lichtausbeute bleibt nach einer kurzen Einschwingzeit auch dann erhalten, wenn anschließend Temperaturschwankungen auftreten. Dadurch werden auch die Voraussetzungen geschaffen, eine konstante Farbtemperatur des ausgesandten Lichtes sicherzustellen und damit Farbverfälschungen bei Beleuchtung von farbigen Flüssigkristallanzeigen auszuschließen.

## Patentansprüche

1. Flüssigkristallanzeigenanordnung, bestehend aus einer Flüssigkristallanzeige (10), einer als Leuchtstofflampe (12) ausgebildeten Lichtquelle und einer mit der Leuchtstofflampe (12) thermisch gekoppelten Wärmequelle (14), dadurch gekennzeichnet, daß die Wärmequelle (14) durch ein temperaturgeregeltes Folienheizelement (14) gebildet ist und daß das Folienheizelement (14) und/oder die Leuchtstofflampe (12) thermisch mit einem Kaltleiter (16) gekoppelt ist und der Kaltleiter (16) elektrisch in Serie mit dem Folienheizelement (14) geschaltet ist.

2. Flüssigkristallanzeigenanordnung nach Anspruch 1, dadurch gekennzeichnet, daß das Folienheizelement (14) eine U-förmige Ausgestaltung besitzt und daß der Kaltleiter (16) zwischen den Schenkeln (18) des Folienheizelements (14) angeordnet ist.

3. Flüssigkristallanzeigenanordnung nach einem der Ansprüche 1 oder 2, dadurch gekennzeichnet, daß das temperaturgeregelte Folienheizelement (14) eine maximale Heizleistung von ca. 25 W und eine minimale Heizleistung von ca. 7 W besitzt und daß die minimale Heizleistung bei Erreichen einer Temperatur von ca. 40°C eingestellt wird.

## Claims

1. Liquid-crystal display arrangement consisting of a liquid-crystal display (10), a light source constructed as a fluorescent lamp (12) and a heat source (14) which is thermally coupled to the fluorescent lamp (12), characterized in that the heat source (14) is formed by a temperature-controlled foil-type heating element (14), and in that the foil-type heating element (14) and/or the fluorescent lamp (12) is thermally coupled to a PTC thermistor (16), and the PTC thermistor (16) is connected electrically in series to the foil-type heating element (14).

2. Liquid-crystal display arrangement according to Claim 1, characterized in that the foil-type heating element (14) has a U-shaped configuration, and in that the PTC thermistor (16) is arranged between the limbs (18) of the foil-type heating element (14).

3. Liquid-crystal display arrangement according to one of Claims 1 or 2, characterized in that the temperature-controlled foil-type heating element (14) has a maximum calorific power of approximately 25 W and a minimum calorific power of approximately 7 W, and in that the minimum calorific power is established when a temperature of approximately 40°C is reached.

## Revendications

1. Système d'affichage à cristaux liquides composé d'un moyen d'affichage à cristaux liquides (20), d'une source lumineuse formée par une lampe fluorescente (12) et d'une source de chaleur (14) couplée thermiquement à la lampe fluorescente (12),
caractérisé en ce que
la source de chaleur (14) est constituée par un élément de feuille chauffante (14) à régulation de température et cet élément de feuille chauffante (14) et/ou la lampe fluorescente (12) sont couplés thermiquement à un conducteur froid (16) branché électriquement en série avec l'élément de feuille chauffante (14).

2. Système d'affichage à cristaux liquides selon la revendication 1,
caractérisé en ce que
l'élément de feuille chauffante (14) a une forme de U et le conducteur froid (16) est placé entre les branches (18) de l'élément de feuille chauffante (14).

3. Système d'affichage à cristaux liquides selon l'une des revendications 1 ou 2,
caractérisé en ce que
l'élément de feuille chauffante (14) régulé en température à une puissance de chauffage maximale d'environ 25 watts et une puissance de chauffage minimale d'environ 7 watts, et la puissance de chauffage minimale est réglée lorsqu'on atteint une température d'environ 40°C.
